(19) Europäisches Patentamt / European Patent Office / Office européen des brevets

(11) **EP 2 991 332 B1**

(12) **FASCICULE DE BREVET EUROPEEN**

(45) Date de publication et mention
de la délivrance du brevet:
**15.01.2020 Bulletin 2020/03**

(51) Int Cl.:
***H04N 1/00*** *(2006.01)*   ***H04N 1/327*** *(2006.01)*

(21) Numéro de dépôt: **15183083.3**

(22) Date de dépôt: **31.08.2015**

(54) **PROCÉDÉ DE DÉTERMINATION D'INSTANTS DE COMMUNICATION DANS UN MODE DE COMMUNICATION SYNCHRONE**

VERFAHREN ZUR BESTIMMUNG DER KOMMUNIKATIONSMOMENTE IN EINEM SYNCHRON-KOMMUNIKATIONSMODUS

METHOD FOR DETERMINING COMMUNICATION INSTANTS IN A SYNCHRONOUS COMMUNICATION MODE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.08.2014 FR 1458119**

(43) Date de publication de la demande:
**02.03.2016 Bulletin 2016/09**

(73) Titulaire: **SAGEMCOM ENERGY & TELECOM SAS**
**92500 Rueil-Malmaison (FR)**

(72) Inventeur: **SARTORI, David**
**92500 RUEIL MALMAISON (FR)**

(74) Mandataire: **Cabinet Le Guen Maillet**
**3, impasse de la Vigie**
**CS 71840**
**35418 Saint-Malo Cedex (FR)**

(56) Documents cités:
**WO-A1-2014/079510    US-A1- 2003 055 866**
**US-A1- 2006 110 171    US-A1- 2012 008 164**
**US-B2- 6 751 648**

**Description**

La présente invention concerne un procédé et un dispositif de détermination d'un instant de transmission, par un dispositif de fourniture de données, d'une requête d'envoi d'un avis de fin de traitement destinée à un équipement de traitement, l'équipement de traitement et le dispositif de fourniture de données communiquant selon un mode de communication synchrone impliquant que chaque communication de l'équipement de traitement vers le dispositif de fourniture de données ne peut se faire qu'en réponse à une réception par l'équipement de traitement d'une requête correspondante provenant du dispositif de fourniture de données.

Il est connu des systèmes dans lesquels au moins un premier dispositif communique dans un mode de communication dit « synchrone » avec un second dispositif. Dans le mode de communication synchrone, l'un des deux dispositifs, par exemple le premier, contrôle chaque communication. Le premier dispositif, dit dispositif maître, peut alors envoyer à tout moment des requêtes au second dispositif, dit dispositif esclave. Par contre, le dispositif esclave ne peut envoyer des informations à destination du dispositif maître qu'en réponse à une requête du dispositif maître. En d'autres termes, le dispositif esclave ne peut envoyer de requête au dispositif maître.

Le mode de communication synchrone contraint donc fortement les communications du dispositif esclave vers le dispositif maître. Il est toutefois courant qu'un dispositif esclave doive transmettre, dès que possible, des informations à un dispositif maître. Cela peut se produire, par exemple, lorsque le dispositif esclave doit informer le dispositif maître de la fin d'une action requise dans une requête du dispositif maître.

Le mode de communication synchrone est utilisé, par exemple, dans des systèmes connus de sauvegarde de données à distance, tels que, par exemple, des systèmes de dématérialisation de documents papiers. Dans de tels systèmes, un dispositif de fourniture de données joue un rôle de dispositif maître et un équipement de traitement joue un rôle de dispositif esclave. Le dispositif de fourniture de données peut par exemple être un disque dur réseau, un dispositif de numérisation de documents tel qu'un scanner, ou encore un dispositif d'acquisition d'images ou de vidéos. L'équipement de traitement assure un service de sauvegarde de données transmises par le dispositif de fourniture de données. Une fonctionnalité utile implémentée sur certains systèmes de sauvegarde de données à distance, tels que certains systèmes de dématérialisation de documents papiers, consiste à informer le dispositif de fourniture de données une fois la dématérialisation ou la sauvegarde effectuée. Un intérêt de cette fonctionnalité est de permettre à un utilisateur du dispositif de fourniture de données de supprimer ou détruire de son côté les données dématérialisées ou sauvegardées à distance. Cette fonctionnalité ne peut être assurée que si le dispositif esclave (*i.e.* l'équipement de traitement) peut transmettre des informations indiquant au dispositif maître (*i.e.* le dispositif de fourniture de données) que les données transmises ont bien été sauvegardées ou dématérialisées.

Une solution consiste à laisser le dispositif esclave attendre une requête du dispositif maître pour pouvoir transmettre ces informations dans une réponse à ladite requête. Cette solution est toutefois peu réactive et est donc inapplicable lorsque les informations du dispositif esclave doivent être transmises dès que possible (dès que les informations sont disponibles du côté du dispositif esclave) au dispositif maître. Dans un exemple de système de dématérialisation de documents papiers, dans lequel un utilisateur utilise un dispositif de numérisation de documents pour dématérialiser un document papier, l'utilisateur peut vouloir obtenir rapidement un acquittement après la numérisation du document papier, de manière à détruire aussitôt le document papier plutôt que de devoir sauvegarder ledit document papier même temporairement.

Une solution communément utilisée consiste à laisser le dispositif maître envoyer régulièrement, avec une fréquence élevée, des requêtes au dispositif esclave pour lui permettre de transmettre ses informations en réponse à l'une des requêtes. Cette solution offre une réactivité élevée mais est toutefois très consommatrice en ressources réseaux. Par ailleurs, lorsqu'un grand nombre de dispositifs maîtres communique avec un dispositif esclave, cette solution peut provoquer une surcharge du dispositif esclave due à une réception d'un grand nombre de requêtes de la part des dispositifs maîtres.

Le document US20120008164A1 décrit un système de traitement comprenant un groupe serveur pouvant être connecté à un dispositif de formation d'images, le groupe serveur incluant une unité de traitement de requêtes configurée pour recevoir des requêtes du dispositif de formation d'images et pour réaliser des traitements basés sur la requête de traitement.

Le document US20060110171 décrit un système de traitement d'images comprenant un dispositif de traitement d'images, une unité de fourniture de services et une unité de fourniture d'informations.

Il est souhaitable de pallier ces différents inconvénients de l'état de la technique.

D'une manière générale, il est souhaitable de fournir une solution adaptée à un système dans lequel un dispositif maître et un dispositif esclave communiquent suivant un mode de communication synchrone, qui permette au dispositif maître de transmettre à bon escient au dispositif esclave, des requêtes permettant au dispositif esclave de transmettre dès que possible des informations au dispositif maître. Il est en outre souhaitable de fournir une solution adaptée à un système dans lequel une pluralité de tels dispositifs maître et/ou une pluralité de tels dispositifs esclave sont présentes.

Selon un premier aspect de la présente invention, l'invention concerne un procédé selon la revendication 1.

De cette manière, le procédé permet d'augmenter la probabilité que le dispositif de fourniture de données (*i.e.* dispositif maître) transmette à bon escient à l'équipement de traitement (*i.e.* dispositif esclave), des requêtes permettant à l'équipement de traitement de transmettre dès que possible au dispositif de fourniture de données des informations indiquant la fin de mise en œuvre d'un traitement sur les données fournies par le dispositif de fourniture des données.

Selon un mode de réalisation, l'envoi de l'avis de fin de traitement en réponse à la réception de ladite requête d'envoi d'un avis de fin de traitement dépend d'une étape préalable de vérification que le traitement à appliquer aux données reçues est terminé, aucun avis de fin de traitement n'étant envoyé tant que ledit traitement n'est pas terminé.

De cette manière, le procédé est sécurisé puisqu'aucun avis de fin de traitement ne peut être transmis avant la fin effective de mise en œuvre du traitement sur les données transmises par le dispositif de fourniture de données.

Selon un mode de réalisation, lorsqu'il ressort de l'étape de vérification que ledit traitement à appliquer aux données reçues n'est pas terminé, l'équipement de traitement met en œuvre une étape de détermination d'un instant de transmission d'une nouvelle requête d'envoi d'un avis de fin de traitement comprenant les étapes suivantes,: déterminer une nouvelle information temporelle en fonction desdites informations représentatives des données reçues, des informations représentatives dudit type du traitement et desdites statistiques en prenant en compte la réception préalable d'au moins une requête d'envoi d'un avis de fin de traitement ; et envoyer ladite nouvelle information temporelle déterminée au dispositif de fourniture de données dans une réponse à ladite requête d'envoi d'un avis de fin de traitement, en vue de permettre au dispositif de fourniture de données de déterminer un instant de transmission de la nouvelle requête d'envoi d'un avis de fin de traitement.

De cette manière, le procédé ne peut se bloquer puisque le dispositif de fourniture de données reçoit, tant que la mise en œuvre du traitement n'est pas terminée, une information temporelle lui permettant de déterminer un instant de transmission d'une nouvelle requête d'envoi d'un avis de fin de traitement.

Selon un mode de réalisation, le dispositif de fourniture de données est un dispositif de numérisation de documents, et les informations représentatives des données reçues sont des informations représentatives d'un document, lesdites informations représentatives d'un document comprenant un nombre de pages et/ou un nombre de couleurs et/ou une taille de page.

Dans ce mode de réalisation, le dispositif de numérisation de documents reçoit de l'équipement de traitement, un avis de fin de traitement, sans avoir à surcharger l'équipement de traitement de requêtes d'envoi d'un avis de fin de traitement.

Selon un mode de réalisation, les informations représentatives dudit type du traitement à appliquer aux données reçues comprennent des informations représentatives d'une procédure d'encodage ou de transcodage, et/ou d'une procédure de compression, et/ou d'une procédure d'horodatage, et/ou d'une procédure de recherche de caractères.

Selon un mode de réalisation, lesdites statistiques sont obtenues à partir d'informations contenues dans une base de données, la base de données étant nourrie à partir d'informations relatives à chaque traitement appliqué par l'équipement de traitement, lesdites informations relatives à chaque traitement comprenant un type de traitement et un temps de traitement.

De cette manière, les statistiques prennent en compte les performances de traitement de l'équipement de traitement.

Selon un mode de réalisation, lesdites statistiques sont obtenues par type de traitement et représentent des temps de mise en œuvre dudit traitement en fonction de nombres de mises en œuvre dudit traitement.

Selon un mode de réalisation, l'équipement de traitement détermine, à partir desdites statistiques, une durée correspondant à une probabilité égale à un seuil qu'un traitement soit terminé, et ladite information temporelle dépend de ladite durée.

Selon un mode de réalisation, le seuil est adaptatif, dépendant d'un nombre moyen de requêtes d'envoi d'un avis de fin de traitement reçues pour un même traitement.

Selon un mode de réalisation, lesdites statistiques sont obtenues sous forme d'une valeur moyenne et d'une variance d'une loi Gaussienne.

Selon un mode de réalisation, lors de la détermination de ladite information temporelle, l'équipement de traitement prend en compte un niveau de charge calculatoire dudit équipement de traitement.

Selon un deuxième aspect de la présente invention, l'invention concerne un dispositif de type équipement de traitement selon la revendication 12.

Selon un troisième aspect de la présente invention, l'invention concerne un système de sauvegarde de données comprenant un dispositif de fourniture de données et un dispositif de type équipement de traitement selon le deuxième aspect.

Selon un quatrième aspect de la présente invention, la présente invention concerne un produit programme d'ordinateur, caractérisé en ce qu'il comporte des instructions pour mettre en œuvre, par un dispositif, le procédé selon le premier aspect lorsque ledit programme est exécuté par un processeur du dispositif.

Selon un cinquième aspect de la présente invention, la présente invention concerne des moyens de stockage, stockant un programme d'ordinateur comportant des instructions pour mettre en œuvre, par un dispositif, le procédé selon le premier aspect lorsque ledit programme est exécuté par un processeur du dispositif.

Les caractéristiques de la présente invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1A illustre schématiquement un exemple de système comprenant un dispositif de fourniture de données et un équipement de traitement communiquant suivant un mode de communication synchrone ;
- la Fig. 1B illustre schématiquement un exemple d'équipement de traitement ;
- la Fig. 1C illustre schématiquement un exemple de dispositif de traitement selon l'invention compris dans l'équipement de traitement ;
- la Fig. 2 illustre schématiquement une architecture matérielle du dispositif de traitement selon l'invention;
- la Fig. 3 illustre schématiquement un procédé, mis en œuvre par le dispositif de traitement selon l'invention, permettant de déterminer un instant de transmission d'une requête d'envoi d'un avis de fin de traitement, la requête étant transmise par le dispositif de fourniture de données ;
- la Fig. 4 illustre schématiquement un procédé, mis en œuvre par le dispositif de fourniture de données, permettant de recevoir un avis de fin de traitement.

La description détaillée ci-après s'attache à décrire différents modes de réalisation de la présente invention dans un contexte de dématérialisation de documents papiers utilisant un système dans lequel, un dispositif de numérisation de documents papiers est un dispositif maître communiquant, dans un mode de communication synchrone, avec un équipement de traitement assurant, entre autres, une sauvegarde des documents dématérialisés, l'équipement de traitement étant un dispositif esclave. Dans ce contexte, l'invention offre une solution efficace permettant à l'équipement de traitement de confirmer au dispositif de fourniture de données qu'une dématérialisation a été correctement effectuée. Les principes de la présente invention s'appliquent cependant dans un contexte plus large de sauvegarde à distance de données dans lequel au moins un dispositif de fourniture de données maître, tel qu'un disque dur réseau, un ordinateur, une tablette, un téléphone intelligent ou encore un dispositif d'acquisition d'images ou de vidéos, communique dans un mode de communication synchrone avec un équipement de traitement esclave assurant, entre autres, une sauvegarde de données transmises par le dispositif de fourniture de données. Dans ce contexte plus large, l'invention offre une solution efficace permettant à l'équipement de traitement de confirmer au dispositif de fourniture de données qu'une sauvegarde de données a été correctement effectuée.

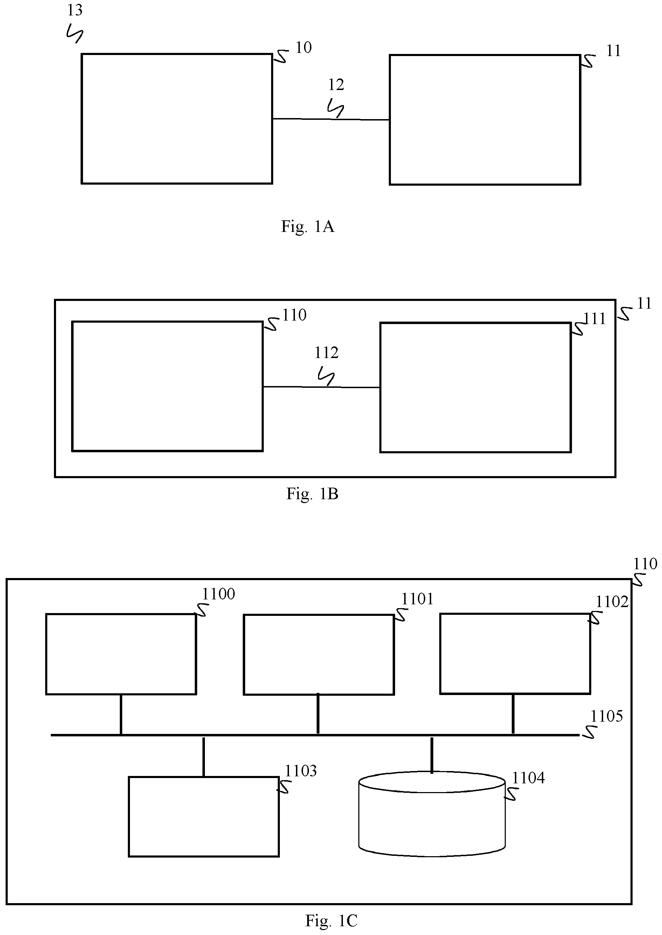

La **Fig. 1A** illustre schématiquement un exemple de système de sauvegarde de données 13 comprenant un dispositif de fourniture de données 10 et un équipement de traitement 11 communiquant suivant un mode de communication synchrone. Le dispositif de fourniture de données 10 est un dispositif maître. L'équipement de traitement 11 est un dispositif esclave. Le dispositif de fourniture de données 10 et l'équipement de traitement 11 communiquent en utilisant un lien de communication 12 appartenant par exemple à un réseau de communication tel qu'un réseau local (« Local Area Network(LAN) » en terminologie anglo-saxonne) ou un réseau étendu (« Wide Area Network (WAN) » en terminologie anglo-saxonne). Dans l'exemple de la Fig. 1A, le dispositif de fourniture de données est un dispositif de numérisation de documents tel qu'un scanner fournissant des données correspondant à des documents papier numérisés. Les données fournies par le dispositif de fourniture de données peuvent être des données binaires brutes telles que des valeurs de pixels correspondant à une image numérique du document papier, ou des données issues d'une compression de l'image numérique du document papier dans un format de compression prédéfini tel qu'un format de compression de documents écrits (tel que le format ISO 32000-1:2008 plus connu sous l'acronyme PDF (Format de Document Portable : « Portable Document Format (PDF) » en terminologie anglo-saxonne) ou un format de compression d'images (tel que le format ISO/CEI 10918-1 / UIT-T Recommandation T.81 connu sous l'acronyme JPEG (Groupe conjoint d'experts en photographie, « Joint Photographic Experts Group » en terminologie anglo-saxonne)).

L'équipement de traitement 11 est apte à réaliser au moins un traitement sur des données fournies par le dispositif de fourniture de données et à offrir un service de sauvegarde desdites données. Dans un mode de réalisation décrit en relation avec la Fig. 1B, l'équipement de traitement 11 comprend deux entités séparées.

La **Fig.1B** illustre schématiquement un exemple d'équipement de traitement. Une première entité comprise dans l'équipement de traitement 11 est un dispositif de traitement 110. Le dispositif de traitement 110 reçoit les données transmises par le dispositif de fourniture de données 10 avec lequel il communique selon un mode synchrone. Le dispositif de traitement 110 est donc un dispositif esclave par rapport au dispositif de fourniture de données 10. Le dispositif de traitement 110 est apte à appliquer un ou plusieurs traitements aux données reçues du dispositif de fourniture de données 10. Dans le cadre de l'exemple du système de dématérialisation de documents papiers, le dispositif de traitement 110 est apte :

- à encoder des données binaires brutes telles que des valeurs de pixels issues du dispositif de fourniture de données dans un format de compression de documents écrits ou un format de compression d'images, et/ou à transcoder des données, issues d'une compression dans un premier format de compression, dans un second format de compression, et/ou

- à compresser des données brutes issues du dispositif de fourniture de données en appliquant une procédure de compression de données telle qu'une procédure de modulation par impulsions et codage différentiel adaptatif (MICDA) (« Adaptive Differential Pulse Code Modulation (ADPCM) » en terminologie anglo-saxonne), une procédure de codage par longueur de plage (« Run Length Coding (RLC) » en terminologie anglo-saxonne) ou une procédure de codage entropique, et/ou
- à appliquer une procédure d'horodatage aux données issues du dispositif de fourniture de données, et/ou
- à appliquer une procédure de suppression de bruit aux données issues du dispositif de fourniture de données, et/ou
- à appliquer une procédure de recherche de caractères aux données issues du dispositif de fourniture de données.

Une seconde entité comprise dans l'équipement de traitement 11 comprend au moins un dispositif, dit dispositif opérateur, 111. Dans le cadre de l'exemple du système de dématérialisation de documents papiers, le dispositif opérateur 111 offre un service de sauvegarde des données correspondant aux documents papiers numérisés par le dispositif de fourniture de données 10 sur lesquelles au moins un traitement a été appliqué par le dispositif de traitement 110. Un document papier numérisé par le dispositif de fourniture de données 10 sur lesquelles au moins un traitement a été appliqué par le dispositif de traitement 110, devient un document dématérialisé lorsqu'il est définitivement sauvegardé par le dispositif opérateur 111. La sauvegarde est en général sécurisée de manière à empêcher une perte d'un document dématérialisé. Le dispositif opérateur utilise par exemple des dispositifs de sauvegarde redondants localisés à différentes positions géographiques, de manière à éviter qu'un incident survenant là où est localisé un dispositif de sauvegarde n'ait d'impact sur tout autre dispositif de sauvegarde. Le dispositif opérateur peut aussi offrir d'autres services, tels que par exemple, un service de classification de documents suivant un type ou un contenu d'un document papier numérisé.

Dans un mode de réalisation, le dispositif de traitement 110 et le dispositif opérateur sont des dispositifs distants localisés à des positions géographiques différentes et reliés par un réseau de communication. Dans ce mode de réalisation, le dispositif de traitement 110 et le dispositif opérateur 111 communiquent selon un mode de communication asynchrone. Dans le cadre de l'invention, lorsqu'un premier et un second dispositif communiquent dans un mode asynchrone, les communications du premier vers le second dispositif et du second vers le premier dispositif peuvent se faire à tout moment, de sorte qu'aucun dispositif ne contrôle les communications.

Dans un mode de réalisation, l'équipement de traitement pourrait tout aussi bien être constitué d'une seule entité assurant l'ensemble de fonctionnalités mises en œuvre par le dispositif de traitement 110 et le dispositif opérateur 111.

La **Fig. 1C** illustre schématiquement un exemple de dispositif de traitement 110 selon l'invention compris dans l'équipement de traitement 11. Le dispositif de traitement 110 comprend, reliés par un bus de communication 1105, un module de réception 1100, un module de mise en œuvre de traitements 1101, un module d'envoi 1102, un module de détermination de statistiques 1103 et un module de mise en œuvre d'une base de données de traitements, dits « base de données de traitement » 1104.

Le module de réception 1100 est apte à recevoir des requêtes, en mode de communication synchrone, du dispositif de fourniture de données 10 et notamment des requêtes contenant des données. Dans le cadre de l'exemple du système de dématérialisation de documents papier, le module de réception 1100 est apte à recevoir des documents papier numérisés. Par ailleurs, le module de réception 1100 est apte à recevoir, pour chaque document numérisé reçu, au moins une information représentative d'au moins un traitement à appliquer audit document numérisé, sous la forme par exemple d'un identifiant d'un type du traitement. De plus, le module de réception 1100 est apte à créer dans la base de données de traitements, pour chaque traitement à appliquer à un document, un ensemble de métadonnées associées audit traitement, chaque traitement correspondant à un type de traitement. Cet ensemble de métadonnées est destiné, entre autres, à stocker des informations représentatives de performances de fonctionnement de l'équipement de traitement 11 pour la mise en œuvre dudit traitement. Cet ensemble de métadonnées comprend par exemple l'identifiant du type du traitement, une durée de mise en œuvre du traitement et des informations représentatives des données ayant subi le traitement. Dans un mode de réalisation, cet ensemble de métadonnées est apte à contenir, en outre, un niveau de charge calculatoire du dispositif de traitement 110 lors de la mise en œuvre d'un traitement. La durée d'un traitement dépend en effet de la disponibilité de ressources calculatoires dans le dispositif de traitement 110.

Dans le cadre de l'exemple du système de dématérialisation de documents papier, les informations représentatives des données sont des informations représentatives d'un document papier comprenant par exemple, un nombre de pages et/ou une taille de pages et/ou un type de document (par exemple « photo » ou « texte ») et/ou un nombre de couleurs dans le document. Les informations représentatives du document peuvent être fournies par le dispositif de fourniture de données 10 ou déterminées par le module de réception 1100 lors de la réception du document. Le module de réception 1100 est apte à transmettre les données qu'il reçoit et chaque identifiant d'un type de traitement associé à ces données au module de mise en œuvre de traitements 1101.

Le module de mise en œuvre de traitements 1101 est apte à recevoir les données et à appliquer à ces données un traitement correspondant à chaque identifiant d'un type de traitement associé à ces données. Le module de mise en œuvre de traitements 1101 est apte à fournir des données issues de la mise en œuvre de chaque traitement. Dans le cadre de l'exemple du système de dématérialisation de documents papier, le module de mise en œuvre de traitements 1101 est apte à fournir un document papier numérisé ayant subi chaque traitement, dit « document papier numérisé traité ». Par ailleurs, suite à la mise en œuvre de chaque traitement, le module de mise en œuvre de traitements 1101 est apte à renseigner l'ensemble de métadonnées correspondant à chaque traitement créé par le module de réception 1100, avec notamment un temps de mise en œuvre dudit traitement et un niveau de charge calculatoire du dispositif de traitement au moment de la mise en œuvre dudit traitement.

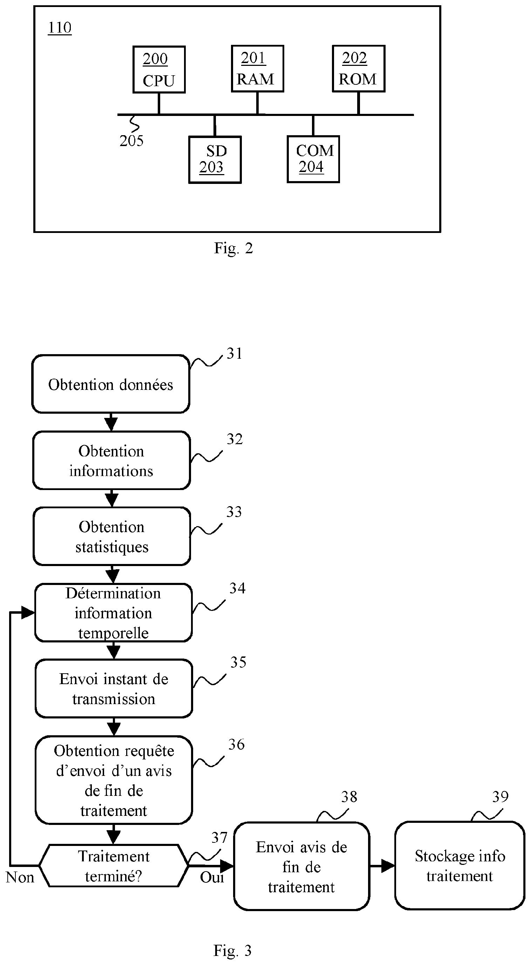

Le module d'envoi 1102 est apte à transmettre les données numérisées traitées, issues de la mise en œuvre de chaque traitement, au dispositif opérateur 111. En retour, le module d'envoi 1102 est apte à recevoir du dispositif opérateur 111, pour lesdites données, une notification de fin de service indiquant la fin de mise en œuvre des services du dispositif opérateur 111 et notamment, la fin de mise en œuvre du service de sauvegarde. Dans le cadre de l'exemple du système de dématérialisation de documents papier, pour chaque document numérisé traité envoyé par le module d'envoi 1102, le module d'envoi 1102 reçoit une notification de fin de dématérialisation indiquant qu'un document dématérialisé correspondant au document papier existe et est sauvegardé par le dispositif opérateur 111. Une information indiquant cette fin de dématérialisation doit alors être envoyée dès que possible au dispositif de fourniture de données 10. Nous décrivons par la suite en relation avec la Fig. 3, un procédé mis en œuvre par le dispositif de traitement 110 permettant d'informer dès que possible le dispositif de fourniture de données 11, de la fin de la mise en œuvre du service de sauvegarde (ou la fin de la dématérialisation). On peut noter que le module d'envoi 1102 est apte à compléter l'ensemble de métadonnées associé à une mise en œuvre d'un traitement avec au moins une information relative au dispositif opérateur 111. Une information relative au dispositif opérateur 111 est, par exemple, une durée correspondant à une somme d'un temps de transmission de données au dispositif opérateur 111, d'un temps de mise en œuvre de chaque service du dispositif opérateur 111 et d'un temps de réception de la notification de fin de mise en œuvre de chaque service du dispositif opérateur 111.

Le module de détermination de statistiques 1103, est apte à déterminer des statistiques représentatives de performances de fonctionnement de l'équipement de traitement à partir de la base de données de traitements 1104 et à analyser les statistiques obtenues. Dans un mode de réalisation, les statistiques représentatives de performances de fonctionnement de l'équipement de traitement, sont des statistiques normalisées. Des statistiques normalisées sont des statistiques indépendantes de certaines caractéristiques des données sur lesquelles a été appliqué un traitement et indépendantes du niveau de charge calculatoire du dispositif de traitement 110 lors de la mise en œuvre dudit traitement. L'utilisation de statistiques normalisées permet d'avoir des statistiques comparables pour un ensemble de traitement, même si les traitements ont été appliqués sur des documents différents et dans des conditions de charge calculatoire différentes.

Des statistiques représentatives de performances de fonctionnement de l'équipement de traitement sont, par exemple, un temps de traitement normalisé pour chaque type de traitement disponible dans le dispositif de traitement. Dans le cadre de l'exemple du système de dématérialisation de documents papier, ces statistiques peuvent par exemple être des statistiques normalisées indépendantes d'un nombre de pages contenues dans un document papier et/ou d'un nombre de couleurs contenues dans un document papier et/ou d'une taille de page d'un document papier et/ou du niveau de charge calculatoire du dispositif de traitement 110 lors de la mise en œuvre dudit traitement.

Dans un mode de réalisation, les statistiques représentatives de performances de fonctionnement de l'équipement de traitement sont un temps de traitement moyen normalisé pour chaque type de traitement. Le temps de traitement moyen normalisé correspondant à un type de traitement est calculé à partir des ensembles de métadonnées stockés dans la base de données de traitements 1104. Dans le cadre de l'exemple de système de dématérialisation de documents papiers, un procédé de calcul d'un temps de traitement moyen normalisé pour un type de traitement comprend, par exemple, une étape de recherche des ensembles de métadonnées contenus dans la base de données de traitements 1104 correspondant au type de traitement recherché, une étape d'obtention d'un temps de traitement pour chaque ensemble de métadonnées trouvée, une étape de normalisation de chaque temps de traitement en fonction d'informations représentatives du document correspondant à l'ensemble de métadonnées et de la charge calculatoire du dispositif de traitement lors de la mise en œuvre dudit traitement, et une étape de calcul d'une moyenne des temps de traitement normalisés obtenus.

Par ailleurs, le module de détermination de statistiques 1103 est apte à déterminer une information temporelle représentative d'une estimation d'un temps de mise en œuvre d'un traitement sur des données fournies par le dispositif de fourniture de données 10. Cette information temporelle est déterminée à partir d'informations représentatives des données reçues, des informations représentatives du traitement à appliquer à ces données et des statistiques représentatives de performances de fonctionnement de l'équipement de traitement 11. L'information temporelle déterminée permet d'estimer un instant de transmission, par le dispositif de fourniture de données 10, d'une requête d'envoi d'un avis de fin de traitement. De cette manière, le dispositif de traitement 110 est apte à fournir une information temporelle permettant au dispositif de fourniture de données 10 de déterminer à quel moment le dispositif de fourniture de données 10 doit transmettre à l'équipement de traitement 11, une demande d'envoi d'un avis de fin de traitement. Par exemple, une information temporelle est obtenue en appliquant un facteur de pondération au temps de traitement moyen normalisé correspondant au type du traitement à appliquer. Dans le cadre de l'exemple de système de dématérialisation de documents papier, le facteur de pondération peut, par exemple, dépendre d'informations représentatives du document tel qu'un nombre de pages dans le document papier numérisé et/ou un nombre de couleurs dans le document papier numérisé et/ou une taille des pages du document papier numérisé.

Dans un mode de réalisation, le module de détermination de statistiques 1103 est apte à déterminer des statistiques représentatives de performances de fonctionnement de l'équipement de traitement sous la forme d'un histogramme normalisé pour chaque type de traitement. Un histogramme normalisé représente pour un type de traitement, un nombre de mises en œuvre d'un traitement correspondant à un type de traitement en fonction d'un temps de mise en œuvre normalisé dudit traitement. Chaque type de traitement est donc associé à un histogramme normalisé. Il est possible à partir d'un tel histogramme normalisé de déterminer une information temporelle correspondant à une durée telle qu'une probabilité pour qu'un traitement soit terminé dans un temps inférieur à cette durée et égale à un seuil, le seuil pouvant être prédéfini ou adaptatif.

Dans un mode de réalisation, l'information temporelle permettant d'estimer un instant de transmission, par le dispositif de fourniture de données 10, d'une requête d'envoi d'un avis de fin de traitement, est obtenue en appliquant un facteur de pondération à une durée $D$, la durée $D$ étant telle qu'une probabilité $P$ qu'un traitement soit terminé dans un temps inférieur à la durée $D$ est égale à un seuil $S$.

Il est courant que les histogrammes normalisés soient modélisables par une loi Gaussienne de moyenne $M$ et de variance $V$. Dans un mode de réalisation, l'information temporelle permettant d'estimer un instant de transmission, par le dispositif de fourniture de données 10, d'une requête d'envoi d'un avis de fin de traitement, est obtenue en appliquant un facteur de pondération à une durée $D$ égale à la moyenne $M$ de la loi gaussienne.

Dans un mode de réalisation, l'information temporelle permettant d'estimer un instant de transmission, par le dispositif de fourniture de données 10, d'une requête d'envoi d'un avis de fin de traitement est obtenue en appliquant une pondération à une durée $D$ égale à une somme entre la moyenne $M$ et la variance $V$ de la loi Gaussienne.

Comme déjà évoqué, la base de données de traitements 1104 est apte à être nourrie par le module de réception 1100, le module de traitement 1101 et le module d'envoi 1102 avec, pour chaque traitement appliqué à des données, un ensemble de métadonnées comprenant des informations représentatives des données, des informations représentatives de la mise en œuvre dudit traitement sur les données par le module de traitement 1101, et des informations représentatives de la mise en œuvre du module d'envoi 1102 sur ces données. Le module de détermination de statistiques 1103 est apte à interroger la base de données de traitements 1104 afin d'obtenir des statistiques sur un ou plusieurs types de traitement et apte à déduire de ces statistiques, une information temporelle permettant de déterminer un instant de transmission, par le dispositif de fourniture de données 10, d'une requête d'envoi d'un avis de fin de traitement.

La **Fig. 2** illustre schématiquement une architecture matérielle d'un dispositif de traitement 110 apte à mettre en œuvre l'invention.

Selon l'exemple d'architecture matérielle représenté à la Fig. 2, le dispositif de traitement 110 comprend alors, reliés par un bus de communication 205 : un processeur ou CPU (« Central Processing Unit » en anglais) 200 ; une mémoire vive RAM (« Random Access Memory » en anglais) 201 ; une mémoire morte ROM (« Read Only Memory » en anglais) 202 ; une unité de stockage tel qu'un disque dur et/ou un lecteur de support de stockage, tel qu'un lecteur de cartes SD (« Secure Digital » en anglais) 203 ; au moins une interface de communication 204 permettant au dispositif de traitement 110 de communiquer avec le dispositif de fourniture de données 10 dans le mode de communication synchrone et avec le dispositif opérateur 111, dans le mode de communication asynchrone. L'unité de stockage 203 peut contenir la base de données de traitements 1104.

Le processeur 200 est capable d'exécuter des instructions chargées dans la RAM 201 à partir de la ROM 202, d'une mémoire externe (non représentée), d'un support de stockage (tel qu'une carte SD), ou d'un réseau de communication. Lorsque le dispositif de traitement 110 est mis sous tension, le processeur 200 est capable de lire de la RAM 201 des instructions et de les exécuter. Ces instructions forment un programme d'ordinateur causant la mise en œuvre, par le processeur 200, de tout ou partie des algorithmes, étapes, et modules décrits en relation avec les Figs. 1C, et 3.

Tout ou partie des algorithmes, modules et étapes décrits en relation avec les Figs. 1C, et 3 peuvent être implémentés sous forme logicielle par exécution d'un ensemble d'instructions par une machine programmable, par exemple un DSP (« Digital Signal Processor » en anglais) ou un microcontrôleur, ou être implémentés sous forme matérielle par un dispositif, une machine ou un composant dédié, par exemple un FPGA (« Field-Programmable Gâte Array » en anglais) ou un ASIC (« Application-Specific Integrated Circuit » en anglais). Par exemple, le module de détermination de statistiques 1103 peut être implémenté par un dispositif indépendant.

La **Fig. 3** illustre schématiquement un procédé, mis en œuvre par le dispositif de traitement 110, permettant d'obtenir une information temporelle permettant de calculer un instant de transmission d'une requête d'envoi d'un avis de fin de traitement, la requête étant transmise par le dispositif de fourniture de données 10.

Dans une étape 31, le dispositif de traitement 110 de l'équipement de traitement 11, reçoit des données de la part du dispositif de fourniture de données 10. Dans l'exemple du système de dématérialisation de documents papier, les données sont un document papier numérisé.

Dans une étape 32, le dispositif de traitement 110 obtient des informations sur un type de traitement à appliquer aux données reçues, et des informations sur les données reçues. Les données ont été transmises dans une requête de transmission de données. Les informations sur le type de traitement à appliquer ont été envoyées en même temps que les données, dans la requête de transmission de données. Les informations sur les données sont soit fournies par le dispositif de fourniture de données 10 soit déterminées par le module de réception 1100 du dispositif de traitement 110 lors de la réception des données.

Dans une étape 33, le module de détermination de statistiques 1103 du dispositif de traitement 110 interroge la base de données de traitements 1104 afin de déterminer des statistiques sur le type de traitement demandé. Par exemple, le module de détermination de statistiques 1103 obtient tous les ensembles de métadonnées, correspondant au type de traitement demandé, contenus dans la base de données de traitement 1104 et détermine un histogramme normalisé pour ce type de traitement.

Dans une étape 34, le module de détermination de statistiques 1103 détermine une information temporelle permettant de déterminer l'instant de transmission, par le dispositif de fourniture de données 10, d'une requête d'envoi d'un avis de fin de traitement. L'information temporelle est déterminée à partir des statistiques déterminées, des informations sur le type de traitement à appliquer aux données reçues, et des informations sur les données reçues. Dans un mode de réalisation, lors de l'étape 34, le module de détermination de statistiques 1103 obtient un seuil S prédéfini et détermine, à partir de l'histogramme normalisé, une durée D telle qu'une probabilité $P$ qu'un traitement soit terminé dans un temps inférieur à la durée D est égale au seuil $S.$ L'information temporelle permettant de déterminer l'instant de transmission, par le dispositif de fourniture de données 10, d'une requête d'envoi d'un avis de fin de traitement, prend une valeur $\Delta$ calculée en appliquant un facteur de pondération, dépendant des données reçues, à la durée D. Dans le cadre de l'exemple du dispositif de dématérialisation de documents papiers, le document papier est constitué d'un nombre de pages NB_Pages, chaque page étant constituée d'un nombre de couleurs NB_Colour, et chaque page ayant une taille standard (21 $\times$ 29,7 cm) correspondant à un sous facteur de pondération Taille. Par ailleurs, le processeur 200 du dispositif de traitement 110 a un niveau de charge courant conduisant à un sous facteur de pondération CPU_load. Dans ce cas, la valeur $\Delta$ est calculée de la manière suivante lorsque le niveau de charge courant du processeur 200 n'est pas pris en compte :

$$\Delta = NB\_Pages \times NB\_Colour \times taille \times D$$

Dans un mode de réalisation où le niveau de charge du processeur 200 est pris en compte, la valeur $\Delta$ est calculée de la manière suivante :

$$\Delta = NB\_Pages \times NB\_Colour \times taille \times CPU\_load \times D$$

Dans une étape 35, le dispositif de traitement 110 envoie, dans une réponse à la requête d'envoi de données, la valeur $\Delta$ de l'information temporelle permettant de déterminer l'instant de transmission, par le dispositif de fourniture de données 10, d'une requête d'envoi d'un avis de fin de traitement.

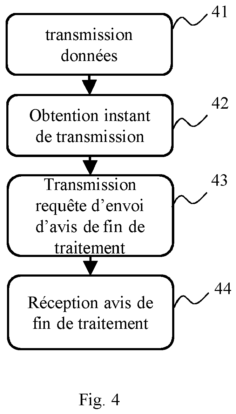

A l'échéance d'une durée égale à la valeur $\Delta$, le dispositif de fourniture de données 10 envoie une requête d'envoi d'un avis de fin de traitement à l'équipement de traitement 11 selon un procédé que nous décrivons en relation avec la Fig. 4.

Dans une étape 36, le dispositif de traitement 110 reçoit la requête d'envoi d'un avis de fin de traitement.

Dans la plupart des cas, le traitement mis en œuvre par le dispositif de traitement 110 est terminé à l'échéance de la durée égale à la valeur $\Delta$. On remarque toutefois que l'information temporelle utilisée pour déterminer l'instant de transmission d'une requête d'envoi d'un avis de fin de traitement, est obtenue à partir d'une estimation d'un temps de mise en œuvre d'un traitement. L'information temporelle est donc approximative. Il est possible alors que la valeur $\Delta$ soit sous-estimée ce qui peut provoquer des transmissions de requêtes d'envoi d'un avis de fin de traitement avant qu'un traitement soit terminé.

Pour traiter ce cas, lors d'une étape 37, le dispositif de traitement 110, détermine, suite à la réception de la requête d'envoi d'un avis de fin de traitement, si le traitement concerné par ladite requête est terminé.

Si le traitement est terminé, dans une étape 38, le dispositif de traitement 110 envoie un avis de fin de traitement au dispositif de fourniture de données 10 dans une réponse à la requête de demande d'envoi d'un avis de fin de traitement.

Dans une étape 39, le module de mise en œuvre de traitements 1101 et le module d'envoi 1102 stockent dans la base de données de traitement, dans l'ensemble de métadonnées correspondant au traitement effectué, des informations sur la mise en œuvre du traitement.

Si, lors de l'étape 37, le traitement n'est pas terminé, le dispositif de traitement met de nouveau en œuvre l'étape 34. Dans ce cas, pour déterminer l'information temporelle permettant de déterminer l'instant de transmission d'une nouvelle requête d'envoi d'un avis de fin de traitement, le dispositif de traitement 110 prend en compte la réception préalable d'au moins une requête d'envoi d'un avis de fin de traitement. Par exemple, la valeur Δ calculée lors de la mise en œuvre précédente de l'étape 34 est pondérée à chaque nouvelle mise en œuvre de l'étape 34, par exemple, par un facteur de pondération supérieur à la valeur « 0 » et inférieur à la valeur « 1 ». Les étapes 34 à 37 sont réitérées tant que le traitement n'est pas terminé lors de la réception d'une nouvelle requête d'envoi d'un avis de fin de traitement.

Dans un mode de réalisation, le seuil S est adaptatif et adapté en fonction d'un nombre moyen de requêtes d'envoi d'un avis de fin de traitement reçues pour un même traitement et calculé par le dispositif de traitement 110. Si pour un même traitement, le dispositif de traitement 110 reçoit en moyenne plus de deux requêtes d'envoi d'un avis de fin de traitement, le dispositif de traitement 110 augmente le seuil S par exemple de 1% (en limitant S à la valeur « 1 ») lors de chaque passage par l'étape 34 pour le type de traitement concerné. Si pour un même traitement, le dispositif de traitement 110 reçoit en moyenne moins de deux requêtes d'envoi d'un avis de fin de traitement, le dispositif de traitement 110 diminue le seuil S par exemple de 1% (en limitant le seuil S à la valeur « 0.5 ») lors de chaque passage par l'étape 34 pour le type de traitement concerné.

La **Fig. 4** illustre schématiquement un procédé, mis en œuvre par le dispositif de fourniture de données 10, permettant de recevoir un avis de fin de traitement de données.

Dans une étape 41, le dispositif de fourniture de données transmet des données à l'équipement de traitement 11 dans une requête d'envoi de données. La requête d'envoi de données comprend des informations représentatives d'un ou plusieurs types de traitement à appliquer aux données et peut contenir des informations représentatives desdites données.

Dans une étape 42, le dispositif de fourniture de données reçoit, en réponse à la requête d'envoi de données, une réponse contenant une information temporelle de valeur Δ permettant de déterminer un instant d'envoi d'une requête d'envoi d'un avis de fin de traitement. Dans un mode de réalisation, le dispositif de fourniture de données détermine une valeur d'un instant courant et ajoute la valeur Δ à la valeur de l'instant courant pour déterminer ladite date d'envoi.

Dans une étape 43, à un moment correspondant à ladite date d'envoi déterminée, le dispositif de fourniture de données 10 envoie une requête d'envoi d'un avis de fin de traitement à l'équipement de traitement 11.

Dans une étape 44, le dispositif de fourniture de données reçoit un avis de fin de traitement pour les données transmise lors de l'étape 41. Dans un mode de réalisation, cette réception provoque un affichage sur un afficheur du dispositif de fourniture de données indiquant que les données ont été sauvegardées, ce qui permet à un utilisateur de détruire les données ainsi sauvegardées. Dans l'exemple du dispositif de dématérialisation de documents papier, l'afficheur peut indiquer la fin de la dématérialisation du document et inviter l'utilisateur à détruire le document papier dématérialisé s'il le souhaite.

Les étapes 42, et 43 peuvent être itérées plusieurs fois tant que le traitement à appliquer aux données transmises n'est pas terminé.

l'étape 34 pour le type de traitement concerné. Si pour un même traitement, le dispositif de traitement 110 reçoit en moyenne moins de deux requêtes d'envoi d'un avis de fin de traitement, le dispositif de traitement 110 diminue le seuil S par exemple de 1% (en limitant le seuil S à la valeur « 0.5 ») lors de chaque passage par l'étape 34 pour le type de traitement concerné.

La **Fig. 4** illustre schématiquement un procédé, mis en œuvre par le dispositif de fourniture de données 10, permettant de recevoir un avis de fin de traitement de données.

Dans une étape 41, le dispositif de fourniture de données transmet des données à l'équipement de traitement 11 dans une requête d'envoi de données. La requête d'envoi de données comprend des informations représentatives d'un ou plusieurs types de traitement à appliquer aux données et peut contenir des informations représentatives desdites données.

Dans une étape 42, le dispositif de fourniture de données reçoit, en réponse à la requête d'envoi de données, une réponse contenant une information temporelle de valeur Δ permettant de déterminer un instant d'envoi d'une requête d'envoi d'un avis de fin de traitement. Dans un mode de réalisation, le dispositif de fourniture de données détermine une valeur d'un instant courant et ajoute la valeur Δ à la valeur de l'instant courant pour déterminer ladite date d'envoi.

Dans une étape 43, à un moment correspondant à ladite date d'envoi déterminée, le dispositif de fourniture de données 10 envoie une requête d'envoi d'un avis de fin de traitement à l'équipement de traitement 11.

Dans une étape 44, le dispositif de fourniture de données reçoit un avis de fin de traitement pour les données transmise lors de l'étape 41. Dans un mode de réalisation, cette réception provoque un affichage sur un afficheur du dispositif de fourniture de données indiquant que les données ont été sauvegardées, ce qui permet à un utilisateur de détruire les données ainsi sauvegardées. Dans l'exemple du dispositif de dématérialisation de documents papier, l'afficheur peut indiquer la fin de la dématérialisation du document et inviter l'utilisateur à détruire le document papier dématérialisé s'il le souhaite.

Les étapes 42, et 43 peuvent être itérées plusieurs fois tant que le traitement à appliquer aux données transmises n'est pas terminé.

**Revendications**

1. Procédé, implémenté par un équipement de traitement (11), pour la détermination d'une information temporelle permettant de déterminer un instant de transmission, par un dispositif de fourniture de données (10), d'une requête d'envoi d'un avis de fin de traitement, l'envoi de l'information temporelle déterminée au dispositif de fourniture de données, et l'envoi d'un avis de fin de traitement au dispositif de fourniture de données, l'équipement de traitement communiquant avec le dispositif de fourniture de données selon un mode de communication synchrone impliquant que chaque communication de l'équipement de traitement vers le dispositif de fourniture de données ne peut se faire qu'en réponse à une réception par l'équipement de traitement d'une requête correspondante provenant du dispositif de fourniture de données, suite à une réception (31) de données transmises par le dispositif de fourniture de données dans une requête d'envoi de données, le procédé comprend les étapes suivantes :

   - obtenir (32) des informations représentatives des données reçues et des informations représentatives d'un type d'un traitement à appliquer aux données reçues,
   - obtenir (33) des statistiques représentatives de performances de fonctionnement de l'équipement de traitement,
   - déterminer (34) ladite information temporelle en fonction des informations représentatives des données reçues, des informations représentatives dudit type du traitement à appliquer aux données reçues et desdites statistiques,
   - envoyer (35) ladite information temporelle déterminée au dispositif de fourniture de données dans une réponse à la requête d'envoi de données, en vue de permettre au dispositif de fourniture de données de déterminer l'instant de transmission de ladite requête d'envoi d'un avis de fin de traitement, et
   - envoyer (38) un avis de fin de traitement au dispositif de fourniture de données en réponse à une réception (36) de ladite requête d'envoi d'un avis de fin de traitement.

2. Procédé selon la revendication 1, **caractérisé en ce que** l'envoi de l'avis de fin de traitement en réponse à la réception de ladite requête d'envoi d'un avis de fin de traitement dépend d'une étape préalable (37) de vérification que le traitement à appliquer aux données reçues est terminé, aucun avis de fin de traitement n'étant envoyé tant que ledit traitement n'est pas terminé.

3. Procédé selon la revendication 2, **caractérisé en ce que**, lorsqu'il ressort de l'étape de vérification que ledit traitement à appliquer aux données reçues n'est pas terminé, l'équipement de traitement met en œuvre une étape de détermination d'un instant de transmission d'une nouvelle requête d'envoi d'un avis de fin de traitement comprenant les étapes suivantes :

   - déterminer (34) une nouvelle information temporelle en fonction desdites informations représentatives des données reçues, des informations représentatives dudit type du traitement et desdites statistiques en prenant en compte la réception préalable d'au moins une requête d'envoi d'un avis de fin de traitement, et,
   - envoyer (35) ladite nouvelle information temporelle déterminée au dispositif de fourniture de données dans une réponse à ladite requête d'envoi d'un avis de fin de traitement, en vue de permettre au dispositif de fourniture de données de déterminer un instant de transmission de la nouvelle requête d'envoi d'un avis de fin de traitement.

4. Procédé selon la revendication 1, 2 ou 3, **caractérisé en ce que** le dispositif de fourniture de données est un dispositif de numérisation de documents, et **en ce que** les informations représentatives des données reçues sont des informations représentatives d'un document, lesdites informations représentatives d'un document comprenant un nombre de pages et/ou un nombre de couleurs et/ou une taille de page.

5. Procédé selon l'une quelconque des revendications précédentes, **caractérisé en ce que** les informations représentatives dudit type du traitement à appliquer aux données reçues comprennent des informations représentatives d'une procédure d'encodage ou de transcodage, et/ou d'une procédure de compression, et/ou d'une procédure d'horodatage, et/ou d'une procédure de recherche de caractères.

6. Procédé selon l'une quelconque des revendications précédentes, **caractérisé en ce que** lesdites statistiques sont obtenues à partir d'informations contenues dans une base de données (1104), la base de données étant nourrie à partir d'informations relatives à chaque traitement appliqué par l'équipement de traitement, lesdites informations relatives à chaque traitement comprenant un type de traitement et un temps de traitement.

7. Procédé selon l'une quelconque des revendications précédentes, **caractérisé en ce que** lesdites statistiques sont obtenues par type de traitement et représentent des temps de mise en œuvre dudit traitement en fonction de nombres de mises en œuvre dudit traitement.

8. Procédé selon la revendication 7, **caractérisé en ce que** l'équipement de traitement détermine à partir desdites statistiques une durée correspondant à une probabilité égale à un seuil qu'un traitement soit terminé, et **en ce que** ladite information temporelle dépend de ladite durée.

9. Procédé selon la revendication 8, **caractérisé en ce que** le seuil est adaptatif, dépendant d'un nombre moyen de requêtes d'envoi d'un avis de fin de traitement reçues pour un même traitement.

10. Procédé selon la revendication 7, 8 ou 9, **caractérisé en ce que** lesdites statistiques sont obtenues sous forme d'une valeur moyenne et d'une variance d'une loi Gaussienne.

11. Procédé selon l'une quelconque des revendications précédentes, **caractérisé en ce que**, lors de la détermination de ladite information temporelle, l'équipement de traitement prend en compte un niveau de charge calculatoire dudit équipement de traitement.

12. Dispositif de type équipement de traitement (11) comprenant un dispositif de traitement (110) et un dispositif opérateur (111) fournissant un service de sauvegarde de données, le dispositif de traitement étant apte à déterminer une information temporelle permettant de déterminer un instant de transmission par un dispositif de fourniture de données (10) d'une requête d'envoi d'un avis de fin de traitement destinée à un équipement de traitement (11), l'équipement de traitement étant apte à communiquer avec le dispositif de fourniture de données selon un mode de communication synchrone impliquant que chaque communication de l'équipement de traitement vers le dispositif de fourniture de données ne peut se faire qu'en réponse à une réception par l'équipement de traitement d'une requête correspondante provenant du dispositif de fourniture de données, le dispositif de traitement comprend :

   - des moyens (32) pour obtenir des informations représentatives de données reçues dans une requête d'envoi de données provenant du dispositif de fourniture de données ;
   - des moyens (32) pour obtenir des informations représentatives d'un type d'un traitement à appliquer aux données reçues ;
   - des moyens (33) pour obtenir des statistiques représentatives de performances de fonctionnement de l'équipement de traitement ;
   - des moyens (34) pour déterminer ladite information temporelle en fonction des informations représentatives des données reçues, des informations représentatives dudit type du traitement à appliquer aux données reçues et desdites statistiques,
   - des moyens (35) pour envoyer ladite information temporelle déterminée au dispositif de fourniture de données dans une réponse à la requête d'envoi de données, en vue de permettre au dispositif de fourniture de données de déterminer l'instant de transmission de ladite requête d'envoi d'un avis de fin de traitement, et
   - des moyens (38) pour envoyer un avis de fin de traitement au dispositif de fourniture de données en réponse à la réception (36) de ladite requête d'envoi d'un avis de fin de traitement ;

   et le dispositif de traitement fournissant des données résultant d'un traitement au dispositif opérateur.

13. Système de sauvegarde de données (13) comprenant un dispositif de fourniture de données (10) et un dispositif de type équipement de traitement (11) selon la revendication 12.

14. Produit programme d'ordinateur, **caractérisé en ce qu'**il comporte des instructions pour mettre en œuvre, par un dispositif, le procédé selon les revendications 1 à 11 lorsque ledit programme est exécuté par un processeur du dispositif.

15. Moyens de stockage, stockant un programme d'ordinateur comportant des instructions pour mettre en œuvre, par un dispositif, le procédé selon les revendications 1 à 11 lorsque ledit programme est exécuté par un processeur du dispositif.

**Patentansprüche**

1. Verfahren, welches von einer Verarbeitungseinrichtung (11) implementiert wird, zur Bestimmung einer Zeitinformation, die es ermöglicht, einen Zeitpunkt der Übertragung, durch eine Datenbereitstellungsvorrichtung (10), einer Sendeanforderung für eine Verarbeitungsendebenachrichtigung zu bestimmen, zum Senden der bestimmten Zeitinformation an die Datenbereitstellungsvorrichtung und zum Senden einer Verarbeitungsendebenachrichtigung an die Datenbereitstellungsvorrichtung,
wobei die Verarbeitungseinrichtung mit der Datenbereitstellungsvorrichtung gemäß einem synchronen Kommunikationsmodus kommuniziert, der beinhaltet, dass jede Kommunikation der Verarbeitungseinrichtung an die Datenbereitstellungsvorrichtung nur in Reaktion auf einen Empfang, durch die Verarbeitungseinrichtung, einer entsprechenden Anforderung von der Datenbereitstellungsvorrichtung erfolgen kann, wobei im Anschluss an einen Empfang (31) von durch die Datenbereitstellungsvorrichtung übertragenen Daten in einer Datensendeanforderung, das Verfahren die folgenden Schritte umfasst:

   - Gewinnen (32) von Informationen, die für die empfangenen Daten repräsentativ sind, und von Informationen, die für einen Typ einer auf die empfangenen Daten anzuwendenden Verarbeitung repräsentativ sind,
   - Gewinnen (33) von Statistiken, die für Betriebsleistungen der Verarbeitungseinrichtung repräsentativ sind,
   - Bestimmen (34) der Zeitinformation in Abhängigkeit von den Informationen, die für die empfangenen Daten repräsentativ sind, von den Informationen, die für den Typ der auf die empfangenen Daten anzuwendenden Verarbeitung repräsentativ sind, und von den Statistiken,
   - Senden (35) der bestimmten Zeitinformation an die Datenbereitstellungsvorrichtung in einer Antwort auf die Datensendeanforderung, um der Datenbereitstellungsvorrichtung zu ermöglichen, den Zeitpunkt der Übertragung der Sendeanforderung für eine Verarbeitungsendebenachrichtigung zu bestimmen, und
   - Senden (38) einer Verarbeitungsendebenachrichtigung an die Datenbereitstellungsvorrichtung in Reaktion auf einen Empfang (36) der Sendeanforderung für eine Verarbeitungsendebenachrichtigung.

2. Verfahren nach Anspruch 1, **dadurch gekennzeichnet, dass** das Senden der Verarbeitungsendebenachrichtigung in Reaktion auf den Empfang der Sendeanforderung für eine Verarbeitungsendebenachrichtigung von einem vorausgehenden Schritt (37) der Überprüfung abhängt, ob die auf die empfangenen Daten anzuwendende Verarbeitung beendet ist, wobei keine Verarbeitungsendebenachrichtigung gesendet wird, solange die Verarbeitung nicht beendet ist.

3. Verfahren nach Anspruch 2, **dadurch gekennzeichnet, dass**, wenn aus dem Schritt der Überprüfung hervorgeht, dass die auf die empfangenen Daten anzuwendende Verarbeitung nicht beendet ist, die Verarbeitungseinrichtung einen Schritt der Bestimmung eines Zeitpunktes der Übertragung einer neuen Sendeanforderung für eine Verarbeitungsendebenachrichtigung durchführt, welcher die folgenden Schritte umfasst:

   - Bestimmen (34) einer neuen Zeitinformation in Abhängigkeit von den Informationen, die für die empfangenen Daten repräsentativ sind, von den Informationen, die für den Typ der Verarbeitung repräsentativ sind, und von den Statistiken unter Berücksichtigung des vorausgehenden Empfangs wenigstens einer Sendeanforderung für eine Verarbeitungsendebenachrichtigung, und
   - Senden (35) der bestimmten neuen Zeitinformation an die Datenbereitstellungsvorrichtung in einer Antwort auf die Sendeanforderung für eine Verarbeitungsendebenachrichtigung, um der Datenbereitstellungsvorrichtung zu ermöglichen, einen Zeitpunkt der Übertragung der neuen Sendeanforderung für eine Verarbeitungsendebenachrichtigung zu bestimmen.

4. Verfahren nach Anspruch 1, 2 oder 3, **dadurch gekennzeichnet, dass** die Datenbereitstellungsvorrichtung eine Vorrichtung zur Digitalisierung von Dokumenten ist, und dadurch, dass die Informationen, die für die empfangenen Daten repräsentativ sind, Informationen sind, die für ein Dokument repräsentativ sind, wobei diese für ein Dokument repräsentativen Informationen eine Seitenanzahl und/oder eine Farbenanzahl und/oder eine Seitengröße umfassen.

5. Verfahren nach einem der vorhergehenden Ansprüche, **dadurch gekennzeichnet, dass** die Informationen, die für den Typ der auf die empfangenen Daten anzuwendenden Verarbeitung repräsentativ sind, Informationen umfassen, die für ein Codierungs- oder Transcodierungsverfahren und/oder für ein Kompressionsverfahren und/oder für ein Zeitstempelverfahren und/oder für ein Zeichensuchverfahren repräsentativ sind.

6. Verfahren nach einem der vorhergehenden Ansprüche, **dadurch gekennzeichnet, dass** die Statistiken aus Informationen gewonnen werden, die in einer Datenbank (1104) enthalten sind, wobei die Datenbank mit auf jede von der Verarbeitungseinrichtung angewandte Verarbeitung bezogenen Informationen gespeist wird, wobei die auf jede Verarbeitung bezogenen Informationen einen Verarbeitungstyp und eine Verarbeitungszeit umfassen.

7. Verfahren nach einem der vorhergehenden Ansprüche, **dadurch gekennzeichnet, dass** die Statistiken für jeden Verarbeitungstyp gewonnen werden und Zeiten einer Durchführung der Verarbeitung in Abhängigkeit von Anzahlen von Durchführungen der Verarbeitung darstellen.

8. Verfahren nach Anspruch 7, **dadurch gekennzeichnet, dass** die Verarbeitungseinrichtung aus den Statistiken eine Dauer bestimmt, die einer Wahrscheinlichkeit, die gleich einem Schwellenwert ist, entspricht, dass eine Verarbeitung beendet ist, und dadurch, dass die Zeitinformation von dieser Dauer abhängt.

9. Verfahren nach Anspruch 8, **dadurch gekennzeichnet, dass** der Schwellenwert adaptiv ist, wobei er von einer mittleren Anzahl von Sendeanforderungen für eine Verarbeitungsendebenachrichtigung abhängt, die für ein und dieselbe Verarbeitung empfangen werden.

10. Verfahren nach Anspruch 7, 8 oder 9, **dadurch gekennzeichnet, dass** die Statistiken in Form eines Mittelwertes und einer Varianz einer Normalverteilung gewonnen werden.

11. Verfahren nach einem der vorhergehenden Ansprüche, **dadurch gekennzeichnet, dass** bei der Bestimmung der Zeitinformation die Verarbeitungseinrichtung eine Höhe des Rechenaufwands der Verarbeitungseinrichtung berücksichtigt.

12. Vorrichtung vom Typ einer Verarbeitungseinrichtung (11), welche eine Verarbeitungsvorrichtung (110) und eine Bedienungsvorrichtung (111), die einen Datensicherungsdienst bereitstellt, umfasst, wobei die Verarbeitungsvorrichtung in der Lage ist, eine Zeitinformation zu bestimmen, die es ermöglicht, einen Zeitpunkt der Übertragung, durch eine Datenbereitstellungsvorrichtung (10), einer für eine Verarbeitungseinrichtung (11) bestimmten Sendeanforderung für eine Verarbeitungsendebenachrichtigung zu bestimmen, wobei die Verarbeitungseinrichtung in der Lage ist, mit der Datenbereitstellungsvorrichtung gemäß einem synchronen Kommunikationsmodus zu kommunizieren, der beinhaltet, dass jede Kommunikation der Verarbeitungseinrichtung an die Datenbereitstellungsvorrichtung nur in Reaktion auf einen Empfang, durch die Verarbeitungseinrichtung, einer entsprechenden Anforderung von der Datenbereitstellungsvorrichtung erfolgen kann, wobei die Verarbeitungsvorrichtung umfasst:

- Mittel (32) zum Gewinnen von Informationen, die für Daten repräsentativ sind, die in einer von der Datenbereitstellungsvorrichtung kommenden Datensendeanforderung empfangen werden;
- Mittel (32) zum Gewinnen von Informationen, die für einen Typ einer auf die empfangenen Daten anzuwendenden Verarbeitung repräsentativ sind;
- Mittel (33) zum Gewinnen von Statistiken, die für Betriebsleistungen der Verarbeitungseinrichtung repräsentativ sind;
- Mittel (34) zum Bestimmen der Zeitinformation in Abhängigkeit von den Informationen, die für die empfangenen Daten repräsentativ sind, von den Informationen, die für den Typ der auf die empfangenen Daten anzuwendenden Verarbeitung repräsentativ sind, und von den Statistiken;
- Mittel (35) zum Senden der bestimmten Zeitinformation an die Datenbereitstellungsvorrichtung in einer Antwort auf die Datensendeanforderung, um der Datenbereitstellungsvorrichtung zu ermöglichen, den Zeitpunkt der Übertragung der Sendeanforderung für eine Verarbeitungsendebenachrichtigung zu bestimmen; und
- Mittel (38) zum Senden einer Verarbeitungsendebenachrichtigung an die Datenbereitstellungsvorrichtung in Reaktion auf einen Empfang (36) der Sendeanforderung für eine Verarbeitungsendebenachrichtigung;

und wobei die Verarbeitungsvorrichtung Daten, die aus einer Verarbeitung resultieren, an die Bedienungsvorrichtung liefert.

13. Datensicherungssystem (13), welches eine Datenbereitstellungsvorrichtung (10) und eine Vorrichtung vom Typ einer Verarbeitungseinrichtung (11) nach Anspruch 12 umfasst.

14. Computerprogrammprodukt, **dadurch gekennzeichnet, dass** es Anweisungen zur Durchführung, durch eine Vorrichtung, des Verfahrens nach den Ansprüchen 1 bis 11, wenn das Programm von einem Prozessor der Vorrichtung ausgeführt wird, umfasst.

15. Speichermittel, welche ein Computerprogramm speichern, das Anweisungen zur Durchführung, durch eine Vorrichtung, des Verfahrens nach den Ansprüchen 1 bis 11, wenn das Programm von einem Prozessor der Vorrichtung ausgeführt wird, umfasst.

**Claims**

1. Method, implemented by an item of processing equipment (11), for determining an item of time information that makes it possible to determine an instant of transmission, by a data-providing device (10), of a request for an end-of-processing notification to be sent, sending the determined item of time information to the data-providing device, and sending an end-of-processing notification to the data-providing device,
the item of processing equipment communicating with the data-providing device according to a synchronous mode of communication, which means that each communication from the item of processing equipment to the data-providing device can take place only in response to the item of processing equipment receiving a corresponding request from the data-providing device, and, after the receipt (31) of data transmitted by the data-providing device in a request for data to be sent, the method comprising the following steps:

   - obtaining (32) items of information representative of the data received and items of information representative of a type of processing operation to be applied to the data received,
   - obtaining (33) statistics representative of the operating performance of the item of processing equipment,
   - determining (34) said item of time information on the basis of the items of information representative of the data received, on the basis of the items of information representative of said type of processing operation to be applied to the data received, and on the basis of said statistics,
   - sending (35) said determined item of time information to the data-providing device in a response to the request for data to be sent, in order to allow the data-providing device to determine the instant of transmission of said request for an end-of-processing notification to be sent, and
   - sending (38) an end-of-processing notification to the data-providing device in response to the receipt (36) of said request for an end-of-processing notification to be sent.

2. Method according to Claim 1, **characterized in that** the sending of the end-of-processing notification in response to the receipt of said request for an end-of-processing notification to be sent is dependent on a prior step (37) of checking that the processing operation to be applied to the data received is finished, no end-of-processing notification being sent until said processing operation is finished.

3. Method according to Claim 2, **characterized in that**, when the checking step reveals that said processing operation to be applied to the data received is not finished, the item of processing equipment carries out a step of determining an instant of transmission of a new request for an end-of-processing notification to be sent, comprising the following steps:

   - determining (34) a new item of time information on the basis of said items of information representative of the data received, on the basis of the items of information representative of said type of processing operation, and on the basis of said statistics, taking into account the prior receipt of at least one request for an end-of-processing notification to be sent, and
   - sending (35) said determined new item of time information to the data-providing device in a response to said request for an end-of-processing notification to be sent, in order to allow the data-providing device to determine an instant of transmission of the new request for an end-of-processing notification to be sent.

4. Method according to Claim 1, 2 or 3, **characterized in that** the data-providing device is a device for digitizing documents, and **in that** the items of information representative of the data received are items of information representative of a document, said items of information representative of a document comprising a number of pages and/or a number of colours and/or a page size.

5. Method according to any one of the preceding claims, **characterized in that** the items of information representative of said type of processing operation to be applied to the data received comprise items of information representative of an encoding or transcoding procedure and/or a compression procedure and/or a timestamping procedure and/or a character search procedure.

6. Method according to any one of the preceding claims, **characterized in that** said statistics are obtained from items of information contained in a database (1104), the database being populated using items of information relating to each processing operation applied by the item of processing equipment, said items of information relating to each processing operation comprising a type of processing operation and a processing time.

7. Method according to any one of the preceding claims, **characterized in that** said statistics are obtained for each type of processing operation and represent times for which said processing operation is carried out on the basis of how many times said processing operation is carried out.

8. Method according to Claim 7, **characterized in that** the item of processing equipment determines, on the basis of said statistics, a time period corresponding to a probability of a processing operation being finished, said probability being equal to a threshold, and **in that** said item of time information is dependent on said time period.

9. Method according to Claim 8, **characterized in that** the threshold is adaptive, depending on an average number of requests for an end-of-processing notification to be sent that are received for the same processing operation.

10. Method according to Claim 7, 8 or 9, **characterized in that** said statistics are obtained in the form of a mean value and a variance of a Gaussian distribution.

11. Method according to any one of the preceding claims, **characterized in that**, when determining said item of time information, the item of processing equipment takes into account a level of computational burden on said item of processing equipment.

12. Device of processing equipment (11) type, comprising a processing device (110) and an operator device (111) providing a data backup service, the processing device being able to determine an item of time information that makes it possible to determine an instant of transmission to an item of processing equipment (11), by a data-providing device (10), of a request for an end-of-processing notification to be sent, the item of processing equipment being able to communicate with the data-providing device according to a synchronous mode of communication, which means that each communication from the item of processing equipment to the data-providing device can take place only in response to the item of processing equipment receiving a corresponding request from the data-providing device, the processing device comprising:

   - means (32) for obtaining items of information representative of data received in a request from the data-providing device for data to be sent;
   - means (32) for obtaining items of information representative of a type of processing operation to be applied to the data received;
   - means (33) for obtaining statistics representative of the operating performance of the item of processing equipment;
   - means (34) for determining said item of time information on the basis of the items of information representative of the data received, on the basis of the items of information representative of said type of processing operation to be applied to the data received, and on the basis of said statistics,
   - means (35) for sending said determined item of time information to the data-providing device in a response to the request for data to be sent, in order to allow the data-providing device to determine the instant of transmission of said request for an end-of-processing notification to be sent, and
   - means (38) for sending an end-of-processing notification to the data-providing device in response to the receipt (36) of said request for an end-of-processing notification to be sent;

   and the processing device providing data resulting from a processing operation to the operator device.

13. Data backup system (13) comprising a data-providing device (10) and a device of processing equipment (11) type according to Claim 12.

14. Computer program product, **characterized in that** it has instructions for carrying out, by way of a device, the method according to Claims 1 to 11 when said program is executed by a processor of the device.

15. Storage means storing a computer program having instructions for carrying out, by way of a device, the method according to Claims 1 to 11 when said program is executed by a processor of the device.

13

10

11

12

Fig. 1A

110

111

11

112

Fig. 1B

110

1100

1101

1102

1105

1103

1104

Fig. 1C

Fig. 2

Fig. 3

```
┌─────────────────┐
│  transmission   │  ⌇ 41
│    données      │
└────────┬────────┘
         ▼
┌─────────────────┐
│ Obtention instant│  ⌇ 42
│ de transmission │
└────────┬────────┘
         ▼
┌─────────────────┐
│  Transmission   │  ⌇ 43
│ requête d'envoi │
│ d'avis de fin de│
│   traitement    │
└────────┬────────┘
         ▼
┌─────────────────┐
│ Réception avis de│  ⌇ 44
│ fin de traitement│
└─────────────────┘
```

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20120008164 A1
- US 20060110171 A